## Europäisches Patentamt

## European Patent Office

## Office européen des brevets

(11) Publication number: **0 099 577**
**B1**

(12) **EUROPEAN PATENT SPECIFICATION**

(45) Date of publication of patent specification: **30.12.86**

(21) Application number: **83107111.3**

(22) Date of filing: **20.07.83**

(51) Int. Cl.⁴: **F 16 B 45/00**

(54) **Swivel hook assembly.**

(30) Priority: **23.07.82 JP 112285/82 u**

(43) Date of publication of application:
**01.02.84 Bulletin 84/05**

(45) Publication of the grant of the patent:
**30.12.86 Bulletin 86/52**

(84) Designated Contracting States:
**BE CH DE FR IT LI NL SE**

(56) References cited:
**FR-A- 482 853**
**FR-A-1 122 172**
**GB-A-1 369 201**
**US-A-3 443 005**
**US-A-3 995 822**

(73) Proprietor: **NIPPON NOTION KOGYO CO., LTD.**
**13, 2-chome, Kanda-Sakuma-cho Chiyoda-ku**
**Tokyo (JP)**

(72) Inventor: **Kasai, Kazumi**
**3105-1, Kamikoizumi**
**Namerikawa-shi Toyama-ken (JP)**

(74) Representative: **Patentanwälte Leinweber &**
**Zimmermann**
**Rosental 7/II Aufg.**
**D-8000 München 2 (DE)**

Courier Press, Leamington Spa, England.

## Description

The present invention relates to a swivel hook assembly consisting of sythetic resin for use on a strap, comprising:

a. a connector adapted for attachment to the strap and having a bar and a pair of legs extending integrally from opposite bar ends respectively;

b. an elongate support extending between said legs and spaced transversely from said connector bar, and

c. a hook including: 1) a hook body having a distal end and defining an openinig, 2) a resilient locking bar integral with said hook body and resiliently engageable with said distal end for normally closing said opening, and 3) a head integral with said hook body,

said legs of said connector having a pair of coaxial holes therein, said support having on opposite ends a pair of co-axial shafts rotatably fitted in said holes, respectively, and support having a central transverse through-hole extending therethough, said head of said hook being rotatably locked in said through-hole against removal form said support.

A swivel hook assembly of this type is shown in Figures 13 to 15 of US—A—3 995 822. In this prior art swivel hook assembly the head of the hook body has an enlarged flange the diameter of which being larger than the through-bore of the support. This means that the hook and the support are not manufactured separately to be connected together subsequently. It is rather necessary to place the bridging member in a casting mold and then cast the hook, or place the finished hook in the casting mold and then cast the support so-to-speak around the head of the hook. But this method of manufacturing is relatively expensive, since it necessitates the use of molding cores of a specific configuration, so that a space is left between the head of the hook and the support, which space makes it possible for the hook to be rotated relative to the support.

Another drawback of this prior art swivel hook consists in that the enlarged flange of the hook projects upwardly from the support, so that it might contact a strap placed around the bar of the yoke. In use of the swivel hook assembly the hook is rotated frequently; the strap therefore is prone to be damaged by the frictional movement of the hook.

The invention aims at improving the prior art swivel hook so that it can be manufactured with an injection-mold apparatus of a simple structure, whereby the strap placed around the transverse bar of the connector is protected from frictional contact with the head of the hook as the swivel hook is being used.

A swivel hook satisfying this requirement is characterized in that said elongate support has at said through-hole a larger rigid recess facing said connector bar, said through-hole defining a co-axial annular seat in said recess directed away from said distal end, and that said head of said hook includes a plurality of angularly spaced resilient locking members extending away from said distal end of said hook body, each of said locking members having a neck disposed in said through-hole, and a retainer having a shoulder facing toward said distal end and lockingly and rotatably engaging said annular seat, the axial length of the retainer being such that when it is placed on the annular seat with the neck in the through-hole the retainer does not project from said recess.

In the case of the swivel hook according to the present invention the hook, on the one hand, and the support, on the other hand, are manufactured in separate working steps and in separate injection molds; subsequently they are permanently connected by deformation of the elastic locking portions of the head of the hook. Since the head of the hook does not project from the support upwardly, there is no danger for it to get into frictional contact with the strap placed around the bar of the connector.

Many other advantages and features of the present invention will become manifest to those versed in the art upon making reference to the detailed description of the accompanying sheets of drawings in which a preferred structural embodiment incorporating the principles of the present invention is shown by way of illustrative example.

Figure 1 is a front elevational view of a swivel hook asssembly according to an embodiment of the present invention;

Figure 2 is a side elevational view of the swivel hook asssembly shown in Figure 1;

Figure 3 is plan view of the swivel hook assembly of Figure 1;

Figure 4 is a cross-sectional view taken along line IV—IV of Figure 1;

Figure 5 is a cross-sectional view taken along line V—V of Figure 1 and Figure 6 is a cross-sectional view taken along line VI—VI of Figure 1.

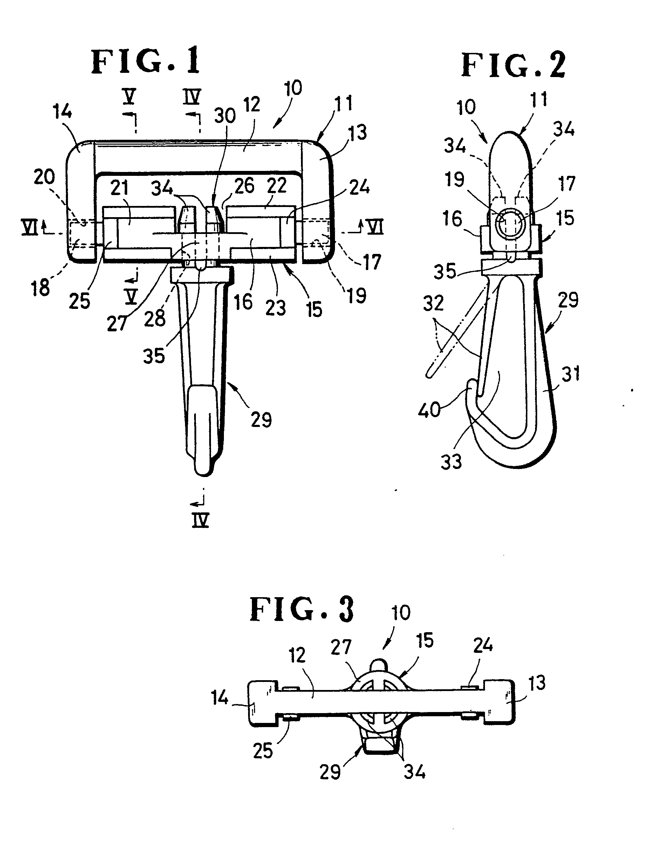

As shown in Figures 1 through 3, a swivel hook assembly 10 has a connector 11 of an inverted U shape composed of a horizontal bar 12 and a pair of laterally spaced legs 13, 14 mounted on the connector 11 at opposite ends thereof and extending vertically downwardly parallel to each other. The horizontal bar 12 and the vertical legs 13 are integrally molded of synthetic resin. The bar 12 will be attached to an end of a carrying or shoulder strap of a bag, for example. The bar 12 is thinner than the legs 13, 14, as illustrated in Figure 3.

The swivel hook assembly 10 also comprises a horizontal elongate support 15 of synthetic resin spaced downwardly from the horizontal bar 12 in parallel relationship and including a central portion 16 and a pair of coaxial shafts 17, 18 extending from opposite ends thereof. The shafts 17, 18 are rotatably journalled respectively in holes 19, 20 defined in the legs 13, 14. Therefore, the support 15 is rotatable relatively to the connector 11 about the axes of the shafts 17, 18.

The central portion 16 includes a main body 21, a pair of upper and lower thinner ribs 22, 23 on the main body 21, and pair of end flanges 24, 25 on opposite ends of the main body 21, the shafts 17, 18 projecting from the flanges 24, 25 respectively. The central portion 16 has a recess 26 defined longitudinally centrally therein and extending from an upper edge of the central portion 16 transversely to a substantially central position therein. The central portion 16 also includes a horizontal circular seat 27 disposed downwardly of the recess 26 and projecting transversely on opposite sides of the central portion 16, the horizontal circular seat 27 having an upper surface lying flush with the bottom of the recess 26. The horizontal circular seat 27 has a central vertical through hole 28 coaxial therewith in communication with the recess 26. The through hole 28 has a diameter smaller than the length of the recess 26 in the longitudinal direction of the central portion 16.

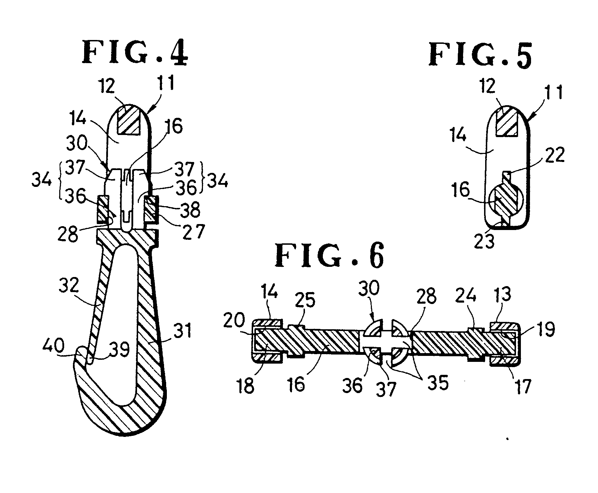

A hook 29 comprises a head 30, a hook body 31 extending downwardly from the head 30, and a locking bar 32 extending downwardly from the head 30 for closing an opening 33 defined by the hook body 31, the head 30, the hook body 31 and the locking bar 32 being integrally molded of synthetic resin. As better shown in Figures 3 and 6, the head 30 is composed of four locking members 34 angularly equally spaced and separated by a cross-shaped slot 35. Each of the locking members 34 has a neck 36 and a retainer 37 tapered off toward its end remote from the neck 36, the retainer 37 having a downwardly facing shoulder 38. The locking bar 32 has an upper end integral with the head 30 and a lower distal end 39 engageable with a distal end 40 of the hook body 31.

The head 30 has a diameter around the necks 36 which is slightly smaller than the diameter of the hole 28 in the horizontal circular seat 27, and a maximum diameter around the locking members 34 which is larger than the diameter of the hole 28. The axial length of the retainers 37 is such that when they are placed on the circular seat 27 with the neck 36 in the hole 28, the retainers 37 do not project out of the recess 26.

For mounting the hook 29 on the support 15, the retainers 37 are forced through the hole 28 while the locking members 34 resiliently flex radially inwardly in the hole 28 until the retainers 37 emerge out of the hole 28, whereupon the retainers 37 snap radially outwardly with the shoulders 38 thereof held against the upper surface of the circular seat 27 and the bottom of the recess 26. The necks 36 of the head 34 are now located within the hole 28. Once the retainers 37 are fully positioned in the recess 26, they are prevented by the shoulders 38 from slipping out through the hole 28. Therefore, the hook 29 is securely mounted on the support 15. Since the diameter of the head 30 around the necks 36 is smaller than the diameter of the hole 38, the hook 29 can rotate about its own axis with respect to the support 15. The support 15 as mounted on the connector 11 is also rotatable about the axes of the shafts 17, 18. This construction allows the hook 29 to rotate about two perpendicular axes relative to the connector 11.

## Claims

1. A swivel hook assembly (10) consisting of synthetic resin for use on a strap, comprising:

a. a connector (11) adapted for attachment to the strap and having a bar (12) and a pair of legs (13, 14) extending integrally from opposite bar ends, respectively;

b. an elongate support (15) extending between said legs (13, 14) and spaced transversely from said connector bar (12), and

c. a hook (29) including: 1) a hook body (31) having a distal end (40) and defining an opening (33), 2) a resilient locking bar (32) integral with said hook body (31) and resiliently engageable with said distal end (40) for normally closing said opening (33), and 3) a head (30) integral with said hook body (31)

said legs (13, 14) of said connector (11) having a pair of co-axial holes (19, 20) therein, said support (15) having on opposite ends a pair of co-axial shafts (17, 18) rotatably fitted in said holes (19, 20), respectively and said support (15) having a central transverse through-hole (28) extending therethrough, said head (30) of said hook (29) being rotatably locked in said through-hole (28) against removal from the said support (15); characterized in that said elongate support (15) has at said through-hole (28) a larger rigid recess (26) facing said connector bar (12), said through-hole (28) defining a co-axial annular seat (27) in said recess (26) directed away from said distal end, and that said head (30) of said hook (29) includes a plurality of angularly spaced resilient locking members (34) extending away from said distal end of said hook body (31), each of said locking members (34) having a neck (36) disposed in said through-hole (28), and retainer (37) having a shoulder facing toward said distal end and lockingly and rotatably engaging said annular seat (27), the axial length of the retainer (37) being such that when it is placed on the annular seat (27) with the neck (36) in the through-hole (28) the retainer does not project from said recess (26).

2. A swivel hook assembly according to claim 1, characterized in that said locking members (34) have outer surfaces defining four arcs of a circle, and each has two flat inner surfaces lying at an angle to each other.

## Patentansprüche

1. Wirbelhaken (10) aus Kunstharz zur Verwendung an einem Band, bestehend aus

a) einem Verbindungsteil (11), das an einem Band befestigbar ist und eine Stange (12) und zwei Schenken (13, 14) umfaßt, die mit gegenüberliegenden Enden der Stange (12) einstückig verbunden sind,

b) einem länglichen Träger (15), der im Querabstand von der Stange (12) angeordnet ist und sich zwischen den Schenklen (13, 14) erstreckt, und c) einem Haken (29) mit 1 einem Hakenkörper (31), der ein abliegendes Ende (40) aufweist und eine Öffnung (33) begrenzt,

2) einem elastischen Sperrglied (32), das mit dem Hakenlkörper (31) einstückig verbunden und mit dem abliegenden Ende (40) elastichen in Eingriff bringbar ist, um die Öffnung (33) normalerweise zu verschließen, und

3) einem mit dem Hakenkörper (31) enstückig verbundenen Kopf (30), wobei die Schenkel (13, 14) des Verbindungsteils (11) zwei koaxiale Löcher (19, 20) aufweisen, wobei der Träger (15) an gegenüberliegenden Enden zwei koaxiale Wellen (17, 18) aufweist, die in die Löcher (19, 20) drehbar eingesetzt sind, und wobei der Träger (15) eine mittige durchgehende Querbohrung (28) aufweist, in der Kopf (30) des Haken (29) drehbar gelagert und gegen eine Ablösung vom Träger (15) gesichert ist, dadurch gekennzeichnet, daß der längliche Träger (15) and der Querbohrung (28) eine größere starre Ausnehmung (26) aufweist, die der Stange (12) zugekehrt ist, wobei die Querbohrung (28) in der Ausnehmung (26) eine von dem abliegenden Ende abgekehrte koaxiale ringförmige Sitzfläche (27) bildet, und daß der Kopf (20) des Hakens (29) mehrere im Winkelabstand angeordnete elastische Sperrglieder (34) aufweist, die sich von dem abliegenden Ende des Hakenkörpers (31) weg erstrecken, wobei jedes Sperrglied (34) einen in der Querbohrung (28) angeordneten Hals (36) und einen Halter (37) umfaßt, der eine dem abliegenden Ende zugekehrte und an der ringförmigen Sitzfläche (27) drehbar anliegende und im Sperreingriff befindliche Schulter aufweist, wobei die axiale Länge des Halters (37) derart ist, daß der Halter (37) nicht aus der Ausnehmung (26) herausragt, wenn er auf der ringförmigen Sitzfläche (27) angeordnet ist, wobei sich der Hals (36) in der Querbohrung (28) befindet.

2. Wirkbelhaken nach Anspruch 1, dadurch gekennzeichnet, daß die Sperrglieder (34) Außenflächen haben, die vier Bogenabschnitte eines Kreises bilden, und daß jedes Sperrglied (34) zwei ebene Innenflächen hat, die einen Winkel miteinander einschließen.

**Revendications**

1. Assemblage (10) à émerillon en résine synthétique utilisable sur une courroie, comprenant:

a) une agrafe (11) prévue pour être fixée sur une courroie et comprenant une barre (12) et une paire de branches (13, 14), reliées respectivement aux extrémités opposées de cette barre;

b) un support allongé (15) s'étendant entre les branches (13, 14) et espacé trensversalement de la barre (12) de l'agrafe; et

c) un émerillon (29) comprenant: 1) un corps (31) comportant une extrémité distale (40) et formant une ouverture (33), 2) une tige de blocage élastique (32) reliée au corps (31) eat pouvant venir en contact élastiquement avec l'extrémité libre (40) pour normalement fermer l'ouverture (33), et 3) une tête (30) reliée au corps (31),

lesdites branches (13, 14) de l'agrafe (11) comportant une paire de trous coaxiaux (19, 20), ledit support (15) comportant sur ses extrémités opposées une paire d'axes coaxiaux (17, 18) montés de façon tournante dans les trous (19, 20), respectivement, et ledit support (15) comportant un trou central transversal (28) traversant ce support, ladite tête (30) de l'émerillon (29) étant bloquée de façon tournante dans ce trou traversant (28) à l'encontre de son enlèvement dudit support (15);

caractérisé en ce que le support allongé (15) comporte, à l'endroit du trou traversant (28), un évidement rigide (26) plus grand faisant face à la barre (12) de l'agraphe, le trou traversant (28) formant dans l'évidement (26) un siège annulaire coaxial (27) dirigé en sens opposé de ladite extrémité distale, et en ce que la tête (30) de l'émerillon (29) comprend une pluralité d'éléments de blocage élastiques (34) espacés angulairement et s'étendant en sens opposé à ladite extrémité distale du corps (31) de l'agrafe, chacun des éléments de blocage (34) comportant un col (36) disposé dans le trou traversant (28), et un élément de retenue (37) comportant un épaulement orienté vers l'extrémité distale et portant de façon bloquante et tournante contre le siège annulaire (27), la longueur axiale de l'élément de retenue (37) étant telle que lorsqu'il est placé sur le siège annulaire (27), le col (36) se trouvant dans le trou traversant (28), l'élément de retenue ne fait pas saillie hors de l'évidement (26).

2. Assemblage à émerillon selon la revendication 1, caractérisé en ce que les éléments de blocage (34) comportent des surfaces extérieures formant quatre arcs de cercle et que chacun d'eux comporte deux surfaces intérieures plates faisant un angle l'une avec l'autre.

0 099 577

# FIG.1

# FIG.2

# FIG.3

# FIG.4

12  11
14
30  16
34 {37     37} 34
36     36
28  38
27

32

40  39  31

# FIG.5

12  11
14
22
16
23

# FIG.6

14  25  30  28  24  13
20
19
18  16  36  37  35  17